# EUROPEAN PATENT SPECIFICATION

(11) **EP 1 400 791 B1**
(45) Date of publication and mention of the grant of the patent: **29.11.2006**
(21) Application number: 03255835.5
(22) Date of filing: 17.09.2003
(51) Int. Cl.: G01G 19/56, G01G 21/28

(54) **A weighing device**
Waage
Dispositif de pesage

(30) Priority: 17.09.2002 GB 0221588
(43) Date of publication of application: 24.03.2004
(73) Proprietor: Terraillon Holdings Limited, Dublin (IE)
(72) Inventor: Massey, Laurence, Dublin (IE)
(74) Representative: Johnson, Terence Leslie

(56) References cited:
- EP-A- 0 992 770
- EP-A- 1 158 282
- EP-A- 1 166 716
- WO-A-97/07384
- GB-A- 2 246 446
- US-A- 4 258 812
- US-A- 4 979 579

## Description

The invention relates to a weighing device, particularly to a kitchen scale.

Kitchen scales have in the past used springs as weight sensing elements, using the principles of Hooke's law to obtain a reading of weight of say a cooking ingredient to be weighed. However, springs can become unreliable through extended use, so providing for an inaccurate reading.

EP-A-992770 relates to a weighing device comprising a plurality of weight sensor members housed in a single housing.

GB-A-2246446 relates to a weighing device comprising a load cell housed in the base of the weighing device.

It is accordingly an object of the invention to seek to mitigate these disadvantages.

According to the invention there is provided a weighing device, comprising a weight-receiving platform supported on two discrete, separate, housing means, a weight responsive element and a weight indicator element house one of the housing means, characterised in that the weight responsive element is in the form of two weight sensor members, with each of the housing means housing one of the weight sensor members.

The two weight sensor members may each comprise a strain gauge sensor.

There may be two contacts between an underside of the platform and the strain-gauge sensor.

There may be an electrical connection between the sensors and weight indicator element.

The electrical connection may suitably comprise an elongate guide such as a tube carrying electrical wires and extending between the two housings. This provides for a relatively efficient yet effective construction.

The two contacts may each comprise stainless steel contacts. This is an effective construction which is resistant to corrosion.

The other housing means may comprise a back spray-painted or printed lens and an LCD.

The other housing means may also comprise a seat for a battery or batteries.

The platform may comprise glass, stone or a stone like material , or a metal such as aluminium.

The device suitably finds use as a kitchen scale.

A kitchen scale embodying the invention is hereinafter described, by way of example, with reference to the accompanying drawings.
Fig. 1 is a perspective view from above of a kitchen scale embodying the invention;

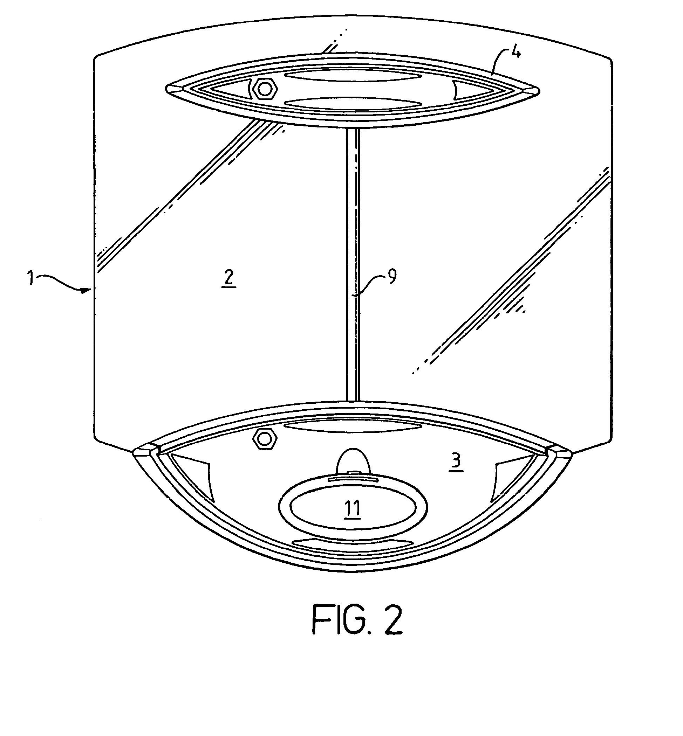

Fig. 2 is an underneath plan view of the scale of Fig. 1; and

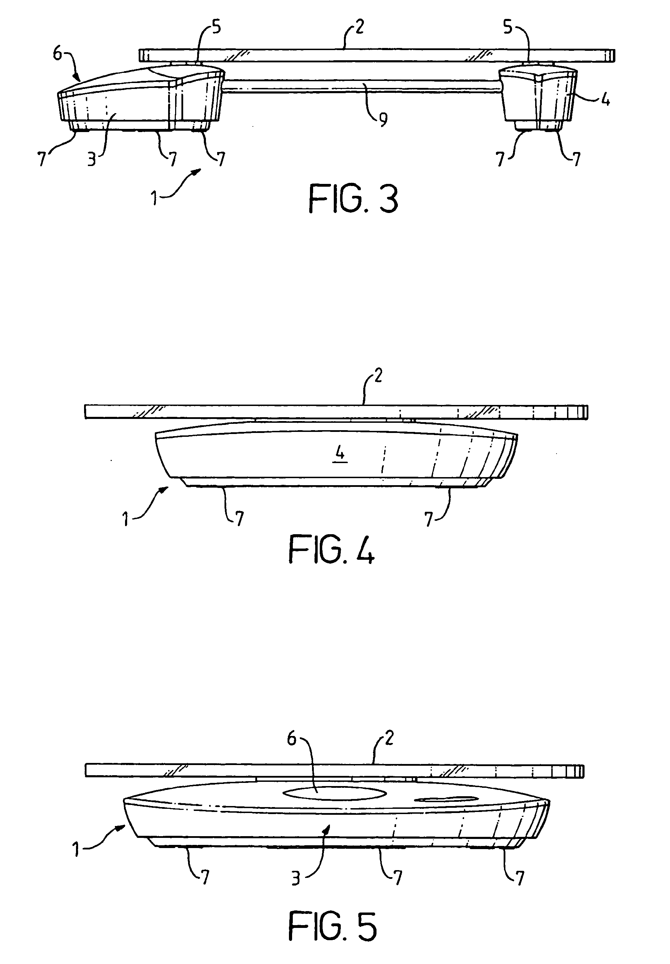

Figs. 3 - 5 show respectively side, rear and front elevational views of the scale of Figs. 1 and 2.

Referring to the drawings there is shown a weighing device 1, in the embodiment in the form of a kitchen scale, which comprises a glass weight-receiving platform 2, spaced apart housing means 3 and 4 or pods of the device for housing at least a weight responsive element 5 (of both housing means 3 and 4) and a weight indicator element 6 (housing means 3 only), the weight responsive element 5 comprising a plurality of weight sensor members.

The pod 3 also houses the weight indicator element in the form of an LCD 6 e.g. a 25mm LCD, the pod 3 comprising a generally lenticular shape in plan and having a back spray-painted, or printed lens.

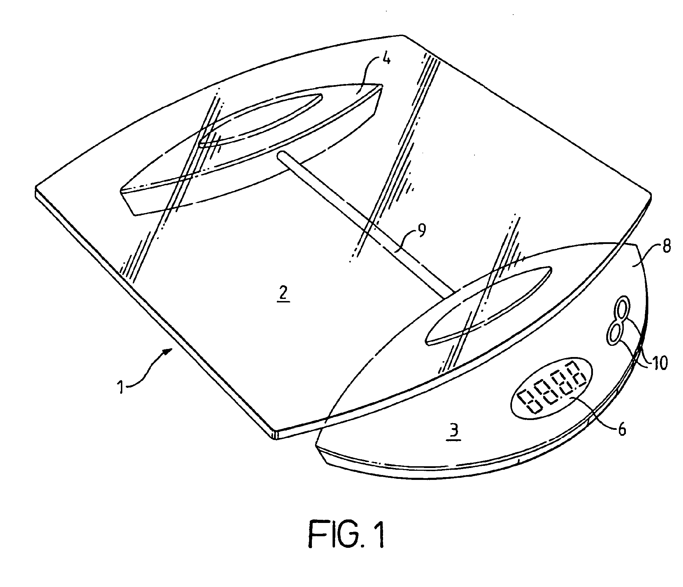

The housing means 3, 4 or pods, respectively also comprise supports for supporting the scale on a substrate via feet such as rubber feet 7. The pods 3, 4 house a weight responsive element 5 in the form of two weight sensor members each in the form of a strain gauge sensor. Between the pods 3 and 4 and the underside (as viewed in Fig. 1 and in use) of the glass platform there are electrical contacts, one each for a respective strain gauge, in the form of stainless steel contacts which are actuated when a weight is placed on the platform 2 to send an electrical impulse to the strain gauge sensors which in turn actuate, via known electronic circuitry, the LCD 6 to indicate the weight on the platform 2.

The pod 3 has control devices such as an "on/off" button and a tare button 10 in a surface 8. The element 6 is powered by batteries accessed through a closure 11.

The platform 2 may, as alternatives to glass, be of stone, or a stone-like material, or metal such as aluminium.

In a kitchen scale embodying the invention and as shown in the drawings, there are two discrete, separate, housing means 3,4 which are fore and aft of the platform and support the weight-receiving platform 2, and which also provide support feet and seatings for the weight responsive elements and the LCD weight indicator element. The means 3,4 are connected by a guide 9 for electrical wiring between the element 5 and LCD 6.

## Claims

1. A weighing device, comprising a weight-receiving platform (2) supported on two discrete, separate, housing means (3,4), a weight responsive element (5) and a weight indicator element (6) housed in one of the housing means (3,4), **characterised in that** the weight responsive element (5) is in the form of two weight sensor members, with each of the housing means (3,4) housing one of the weight sensor members.

2. A weighing device according to claim 1, **characterised by** the two weight sensor members each comprising a strain gauge sensor.

3. A weighing device according to claim 2, **characterised by** contacts between an underside of the platform (2) and the strain-gauge sensors.

4. A weighing device according to any one of the preceding claims, **characterised by** an electrical connection between the sensors and weight indicator element.

5. A weighing device according to claim 4, **characterised by** the electrical connection comprising a guide (9) carrying electrical wires and extending between the two housings (3,4).

6. A weighing device according to any of claims 5 to 7, **characterised by** the two contacts each comprising stainless steel contacts.

7. A weighing device according to any one of the preceding claims, **characterised by** the housing means (3) comprising a back spray painted or printed lens and an LCD.

8. A weighing device according to claim 7, **characterised by** the housing means (3) comprising a seat for a battery or batteries.

9. A weighing device according to any preceding claim, **characterised by** the platform (2) comprising glass.

10. A weighing device according to any of claims 1 to 8, **characterised by** the platform (2) comprising stone or a stone like material, or a metal such as aluminium.

11. A weighing device according to any preceding claim, **characterised by** comprising a kitchen scale.

## Patentansprüche

1. Eine Waage, umfassend eine sich auf zwei diskrete, getrennte Gehäusemittel (3, 4) aufstützende gewichtsaufnehmende Plattform (2), ein auf das Gewicht reagierendes Element (5) und ein in einem der Gehäusemittel (3, 4) untergebrachtes Gewichtanzeigeelement (6), **dadurch gekennzeichnet, dass** das auf das Gewicht reagierende Element (5) in Form von zwei Gewichtsensorelementen ist, wobei jedes der Gehäusemittel (3, 4) eines der Gewichtsensorelemente aufnimmt.

2. Eine Waage nach Patentanspruch 1, **gekennzeichnet durch** die zwei Gewichtssensorelemente, die beide einen Dehnungsmesssensor umfassen.

3. Eine Waage nach Patentanspruch 2, **gekennzeichnet durch** Kontakte zwischen einer Unterseite der Plattform (2) und den Dehnungsmesssensoren.

4. Eine Waage nach irgendeinem der vorangehenden Patentansprüche, **gekennzeichnet durch** eine elektrische Verbindung zwischen den Sensoren und dem Gewichtanzeigeelement.

5. Eine Waage nach Patentanspruch 4, **dadurch gekennzeichnet, dass** die elektrische Verbindung eine Führung (9) umfasst, die elektrische Drähte trägt und sich zwischen den beiden Gehäusen (3, 4) erstreckt.

6. Eine Waage nach irgendeinem der Patentansprüche 5 bis 7, **gekennzeichnet durch** die zwei Kontakte, die beide Kontakte aus rostfreiem Stahl umfassen.

7. Eine Waage nach irgendeinem der vorangehenden Patentansprüche, **dadurch gekennzeichnet, dass** die Gehäusemittel (3) eine durch Rückspray gestrichene oder gedruckte Linse und ein LCD umfassen.

8. Eine Waage nach Patentanspruch 7, **dadurch gekennzeichnet, dass** die Gehäusemittel (3) einen Sitz für eine Batterie oder Batterien umfassen.

9. Eine Waage nach irgendeinem der vorangehenden Patentansprüche, **dadurch gekennzeichnet, dass** die Plattform (2) Glas umfasst.

10. Eine Waage nach irgendeinem der Ansprüche 1 bis 8, **dadurch gekennzeichnet, dass** die Plattform (2) Stein, oder steinähnliches Material, oder ein Metall wie Aluminium umfasst.

11. Eine Waage nach irgendeinem der vorangehenden Patentansprüche, **dadurch gekennzeichnet dass** sie eine Küchenwaage umfasst.

## Revendications

1. Dispositif de pesage, comprenant une plate-forme de réception du poids (2) supportée sur deux moyens de boîtier discrets, séparés (3, 4), un élément sensible au poids (5) et un élément indicateur du poids (6) logés dans un des moyens de boîtier (3, 4), **caractérisé en ce que** l'élément sensible au poids (5) a la forme de deux éléments de détection du poids, chacun des moyens de boîtier (3, 4) contenant un des éléments de détection du poids.

2. Dispositif de pesage selon la revendication 1, **caractérisé par** les deux éléments de détection du poids, comprenant chacun un capteur à jauge de contrainte.

3. Dispositif de pesage selon la revendication 2, **caractérisé par** des contacts agencés entre un côté inférieur de la plate-forme (2) et les capteurs à jauge de contrainte.

4. Dispositif de pesage selon l'une quelconque des revendications précédentes, **caractérisé par** une connexion électrique entre les capteurs et l'élément indicateur du poids.

5. Dispositif de pesage selon la revendication 4, **caractérisé en ce que** la connexion électrique comprend un guide (9), supportant des fils électriques et s'étendant entre les deux boîtiers (3, 4).

6. Dispositif de pesage selon l'une quelconque des revendications 5 à 7, **caractérisé par** les deux contacts, comprenant chacun des contacts en acier inoxydable.

7. Dispositif de pesage selon l'une quelconque des revendications précédentes, **caractérisée en ce que** le moyen de boîtier (3) comprend une lentille peinte par pulvérisation arrière ou une lentille imprimée et un affichage à cristaux liquides.

8. Dispositif de pesage selon la revendication 7, **caractérisé en ce que** le moyen de boîtier (3) comprend un logement pour une pile ou des piles.

9. Dispositif de pesage selon l'une quelconque des revendications précédentes, **caractérisé en ce que** la plate-forme (2) comprenant du verre.

10. Dispositif de pesage selon l'une quelconque des revendications 1 à 8, **caractérisé en ce que** la plate-forme (2) est composée de pierre ou d'un matériau du type de pierre, ou d'un métal comme l'aluminium.

11. Dispositif de pesage selon l'une quelconque des revendications précédentes, **caractérisé en ce qu'**il comprend une balance de cuisine.
